# EUROPEAN PATENT APPLICATION

(11) **EP 4 844 831 A1**
(43) Date of publication of application: **25.11.2026**
(21) Application number: 25858320.2
(22) Date of filing: 31.03.2025
(51) Int. Cl.: H01M 4/38, H01M 4/134, H01M 4/66

(54) **POROUS NEGATIVE ELECTRODE SHEET AND MANUFACTURING METHOD THEREFOR, BATTERY CELL, BATTERY DEVICE, AND ELECTRIC DEVICE**

(30) Priority: 30.08.2024 CN 202411215851
(71) Applicant: Contemporary Amperex Technology Co., Limited, Ningde, Fujian 352100 (CN)
(72) Inventor: ZHENG, Yilin, Ningde, Fujian 352100 (CN); GUAN, Wenhao, Ningde, Fujian 352100 (CN); GE, Xiaoming, Ningde, Fujian 352100 (CN)
(74) Representative: Jacob, Reuben Ellis
(86) International application number: PCT/CN2025/086324
(87) International publication number: WO 2026/045269

(57) **Abstract**

The present disclosure provides a porous negative electrode plate and a manufacturing method therefor, a battery cell, a battery device, and an electric device. The porous negative electrode plate comprises a porous polymer substrate, wherein the porous polymer substrate comprises a plurality of pores. The porous negative electrode plate comprises a lithium metal layer, wherein the lithium metal layer is located on ridges on surfaces of the porous polymer substrate in a thickness direction thereof and on ridges of the pores inside the porous polymer substrate; or, the porous negative electrode plate comprises a lithium alloy layer, wherein the lithium alloy layer is located on ridges on surfaces of the porous polymer substrate in a thickness direction thereof and on ridges of the pores inside the porous polymer substrate. The use of the porous negative electrode plate in the battery cell can enable the battery cell to have high gravimetric energy density, high initial coulombic efficiency, and good cycling performance.

## Description

### CROSS-REFERENCE TO RELATED APPLICATIONS

This application claims the priority of Chinese patent application 202411215851.8 entitled "POROUS NEGATIVE ELECTRODE PLATE AND PREPARATION METHOD THEREFOR, BATTERY CELL, BATTERY APPARATUS, AND POWER CONSUMING APPARATUS" and filed on August 30, 2024, which is incorporated herein by reference in its entirety.

### TECHNICAL FIELD

The present disclosure relates to a porous negative electrode plate and a preparation method therefor, a battery cell, a battery apparatus, and a power consuming apparatus.

### BACKGROUND

To further improve gravimetric energy densities of battery cells, a porous polymer may be used as a negative electrode framework. The use of the porous polymer framework can reduce the weight of a negative electrode, and increase the surface area of pores inside the negative electrode, so that a current density of the negative electrode can be reduced, to relieve growth of lithium dendrites, providing space for volume expansion during lithium deposition. However, the negative electrode having the porous polymer framework lowers initial coulombic efficiency of the battery cell, and affects cycling performance of the battery cell.

### SUMMARY

The present disclosure provides a porous negative electrode plate and a preparation method therefor, a battery cell, a battery apparatus, and a power consuming apparatus. The use of the porous negative electrode plate in the battery cell can enable the battery cell to have a high gravimetric energy density, a high initial coulombic efficiency, and good cycling performance.

According to a first aspect, the present disclosure provides a porous negative electrode plate. The porous negative electrode plate includes a porous polymer substrate, where the porous polymer substrate includes a plurality of pores. The porous negative electrode plate includes a lithium metal layer, where the lithium metal layer is located on ridges on a surface of the porous polymer substrate in a thickness direction of the porous polymer substrate and on ridges of the pores inside the porous polymer substrate; or the porous negative electrode plate includes a lithium alloy layer, where the lithium alloy layer is located on the ridges on the surface of the porous polymer substrate in the thickness direction of the porous polymer substrate and on the ridges of the pores inside the porous polymer substrate.

The lithium metal layer or the lithium alloy layer is provided on the ridges on the surface of the porous polymer substrate in the thickness direction of the porous polymer substrate and the ridges of the pores inside the porous polymer substrate. The lithium metal layer or the lithium alloy layer supplements intercalated lithium of the porous polymer substrate with a potential amount in advance, so that a battery cell using the porous negative electrode plate has a high initial coulombic efficiency and good cycling performance. The lithium metal layer or the lithium alloy layer is located on both the ridges on the surface of the porous polymer substrate in the thickness direction of the porous polymer substrate and the ridges of the pores inside the porous polymer substrate, and can further better compensate for lithium loss caused by reasons such as formation of a solid electrolyte interface (SEI) film by the negative electrode and generation of dead lithium, so that the battery cell has the high initial coulombic efficiency and the good cycling performance. Therefore, the use of the porous negative electrode plate provided in the present disclosure in the battery cell can enable the battery cell to have a high gravimetric energy density, a high initial coulombic efficiency, and good cycling performance.

In some embodiments, the porous polymer substrate is a non-woven polymer fiber structure substrate or a porous foam polymer substrate.

In some embodiments, a material of the non-woven polymer fiber structure substrate includes one or more of polyimide, polyvinylidene fluoride, polyacrylonitrile, polyethlylene terephthalate, poly(p-phenylene terephthalamide), poly(methyl methacrylate), polyurethane, polystyrene, poly(hexamethylene adipamide), polycaprolactam, polyetherimide, and derivatives thereof.

In some embodiments, the porous foam polymer substrate includes one or more of polyimide foam, polyethylene foam, polypropylene foam, polyurethane foam, polystyrene foam, melamine formaldehyde foam, and polyvinyl alcohol foam.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, and a micro-morphology of the lithium metal layer is nodular.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, and a thickness of the lithium metal layer ranges from 0.1 µm to 1 µm.

The thickness of the lithium metal layer is within the foregoing range, so that the porous negative electrode plate has high tensile strength and compressive strength while having the high initial coulombic efficiency.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, a passivation layer is further provided on the lithium metal layer, and the passivation layer includes Li₂O.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, and the lithium metal layer is away from the porous polymer substrate.

In some embodiments, the conductive metal layer includes one or more of elemental Cu, Fe, Ni, and Ti, and alloys thereof.

In some embodiments, an areal density of the conductive metal layer ranges from 40 g/m² to 60 g/m².

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, the lithium metal layer is away from the porous polymer substrate, and the lithium metal layer includes a plurality of lithium metal particles.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, the lithium metal layer is away from the porous polymer substrate, and a thickness of the lithium metal layer ranges from 0.1 µm to 1 µm.

The thickness of the lithium metal layer is within the foregoing range, so that the porous negative electrode plate has high tensile strength and compressive strength while having the high initial coulombic efficiency.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, the lithium metal layer is away from the porous polymer substrate, a passivation layer is further provided on the lithium metal layer, and the passivation layer includes Li₂O.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, and the lithium alloy layer is away from the porous polymer substrate.

In some embodiments, the conductive metal layer includes one or more of elemental Cu, Fe, Ni, and Ti, and alloys thereof.

In some embodiments, an areal density of the conductive metal layer ranges from 40 g/m² to 60 g/m².

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and the lithium alloy layer includes a plurality of lithium alloy particles.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and the lithium alloy layer includes element Li and at least one element of Sn, Zn, Bi, Au, Ag, Al, Si, Mg, Pt, Pb, Be, Ga, In, Ge, Sb, and Te.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and a thickness of the lithium alloy layer ranges from 0.1 µm to 2 µm.

The thickness of the lithium alloy layer is within the foregoing range, so that the porous negative electrode plate has high tensile strength and compressive strength while having the high initial coulombic efficiency.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, a passivation layer is further provided on the lithium alloy layer, and the passivation layer includes Li₂O.

In some embodiments, a thickness of the porous negative electrode plate ranges from 50 µm to 100 µm.

In some embodiments, a porosity of the porous negative electrode plate ranges from 85% to 95%.

In some embodiments, a distribution range of pore diameters of the porous negative electrode plate is from 4 µm to 12 µm.

In some embodiments, an open porosity of the porous negative electrode plate is greater than or equal to 99%.

In some embodiments, a distribution range of ridge diameters of the porous negative electrode plate is from 0.5 µm to 2.5 µm.

According to a second aspect, the present disclosure provides a preparation method for a porous negative electrode plate, including the following steps: providing a porous polymer substrate, the porous polymer substrate including a plurality of pores; and forming a lithium metal layer on ridges on a surface of the porous polymer substrate in a thickness direction of the porous polymer substrate and on ridges of the pores inside the porous polymer substrate by lithium thermal evaporation.

In some embodiments, the preparation method for a porous negative electrode plate includes the following steps: providing a porous polymer substrate, where the porous polymer substrate includes a plurality of pores, and a conductive metal layer is provided on the ridges on the surface of the porous polymer substrate in the thickness direction of the porous polymer substrate and on the ridges of the pores inside the porous polymer substrate; and forming a lithium metal layer by lithium thermal evaporation on the conductive metal layer on the ridges on the surface of the porous polymer substrate in the thickness direction of the porous polymer substrate and on the conductive metal layer on the ridges of the pores inside the porous polymer substrate.

In some embodiments, the preparation method for a porous negative electrode plate includes the following steps: providing a porous polymer substrate, where the porous polymer substrate includes a plurality of pores, a conductive metal layer and a lithiophilic layer are provided on the ridges on the surface of the porous polymer substrate in the thickness direction of the porous polymer substrate and on the ridges of the pores inside the porous polymer substrate, and the conductive metal layer is located between the lithiophilic layer and the porous polymer substrate; and forming a lithium alloy layer through reaction of lithium metal with the lithiophilic layer on the ridges on the surface of the porous polymer substrate in the thickness direction of the porous polymer substrate and the lithiophilic layer on the ridges of the pores inside the porous polymer substrate by lithium thermal evaporation.

In some embodiments, the lithiophilic layer includes one or more of elemental Sn, Zn, Bi, Au, Ag, Al, Si, Mg, Pt, Pb, Be, Ga, In, Ge, Sb, and Te, and alloys thereof.

In some embodiments, an areal density of the lithiophilic layer ranges from 2 g/m² to 3 g/m².

In some embodiments, the conductive metal layer includes one or more of elemental Cu, Fe, Ni, and Ti, and alloys thereof.

In some embodiments, an areal density of the conductive metal layer ranges from 40 g/m² to 60 g/m².

In some embodiments, a deposition rate of the lithium thermal evaporation is less than or equal to 5 Å/s.

In some embodiments, after the step of lithium thermal evaporation, the preparation method further includes a step of passivation processing.

In some embodiments, the passivation processing is performed in an oxygen-containing atmosphere, an inert gas atmosphere, or a carbon dioxide atmosphere.

According to a third aspect, the present disclosure provides a battery cell, including a positive electrode plate, a separator, and the porous negative electrode plate according to the first aspect or a porous negative electrode plate prepared by using the preparation method according to the second aspect, where the separator is disposed between the positive electrode plate and the porous negative electrode plate.

According to a fourth aspect, the present disclosure provides a battery apparatus, including a plurality of battery cells according to the third aspect of the present disclose.

According to a fifth aspect, the present disclosure provides a power consuming apparatus, including the battery cell according to the third aspect of the present disclose or the battery apparatus according to the fourth aspect of the present disclose.

### BRIEF DESCRIPTION OF THE DRAWINGS

To describe the technical solutions of the embodiments of the present disclosure more clearly, the following briefly describes the accompanying drawings for describing the embodiments of the present disclosure. It is clear that the accompanying drawings described below are merely some implementations of the present disclosure, and a person of ordinary skill in the art may further derive other drawings based on the accompanying drawings without creative efforts.
FIG. 1 is a schematic diagram of a battery cell according to some embodiments of the present disclosure;
FIG. 2 is a schematic diagram of a power consuming apparatus according to some embodiments of the present disclosure;
FIG. 3 shows a scanning electron microscope (SEM) image of a commercial non-woven polyimide fiber film;
FIG. 4 and FIG. 5 show an SEM image of a porous negative electrode plate prepared in example 1;
FIG. 6 shows an SEM image of a porous negative electrode plate prepared in example 2; and
FIG. 7 shows an SEM image of a porous negative electrode plate prepared in example 3.

### DETAILED DESCRIPTION

Embodiments of a porous negative electrode plate and a preparation method therefor, a battery cell, a battery apparatus, and a power consuming apparatus in the present disclosure are specifically disclosed in detail below and appropriately described with reference to the accompanying drawings. However, there may be situations where unnecessary detailed explanations are omitted. For example, there are situations where detailed explanations of well-known matters are omitted and repeated explanations of the same structure are actually provided. Thus, the following descriptions do not become unnecessarily lengthy, which facilitates the easy comprehension of those skilled in the art. In addition, the accompanying drawings and the following explanations are provided for those skilled in the art to fully understand the present disclosure and are not intended to limit the subject matter recorded in the claims.

The "range" disclosed in the present disclosure is limited in the form of a lower limit and an upper limit. The given range is limited by selecting a lower limit and an upper limit, and the selected lower limit and upper limit limit the boundary of the special range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. In addition, if the minimum range values 1 and 2 are listed, and if the maximum range values 3, 4, and 5 are listed, the following ranges can all be expected: 1 to 3, 1 to 4, 1 to 5, 2 to 3, 2 to 4, and 2 to 5. In the present disclosure, unless otherwise specified, the numerical value range "a to b" represents an abbreviated representation of any combination of real numbers between a and b, where a and b are both real numbers. For example, the numerical range "0 to 5" means that all real numbers between 0 and 5 are listed herein, and "0 to 5" is merely an abbreviated representation of the combination of these numbers. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present disclosure can be combined with each other to form new technical solutions, and such technical solutions should be considered to be included in the disclosure of the present disclosure.

Unless otherwise specified, all the technical features and optional technical features of the present disclosure can be combined with each other to form new technical solutions, and such technical solutions should be considered to be included in the disclosure of the present disclosure.

Unless otherwise specified, all the steps in the present disclosure can be carried out, either in order or randomly, preferably in order. For example, that "the method includes step (a) and step (b)" indicates that the method may include step (a) and step (b) performed sequentially, or the method may include step (b) and step (a) performed sequentially. For example, that "the method may further include step (c)" indicates that step (c) may be added to the method in any order. For example, the method may include step (a), step (b), and step (c), may include step (a), step (c), and step (b), or may include step (c), step (a), and step (b).

Unless otherwise specified, in the present disclosure, the terms "first", "second", and the like are used to distinguish different objects, rather than to describe a specific order or primary-secondary relationship.

In the present disclosure, the term "a plurality of" or "a plurality of types of" indicates two or more.

In the present disclosure, unless otherwise specially stated, that the first feature is located "above" or "below" the second feature may be that the first feature is in direct contact with the second feature, or that the first feature is in indirect contact with the second feature through an intermediate medium. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

Unless otherwise specified, a test temperature of parameters mentioned in the present disclosure is 25°C.

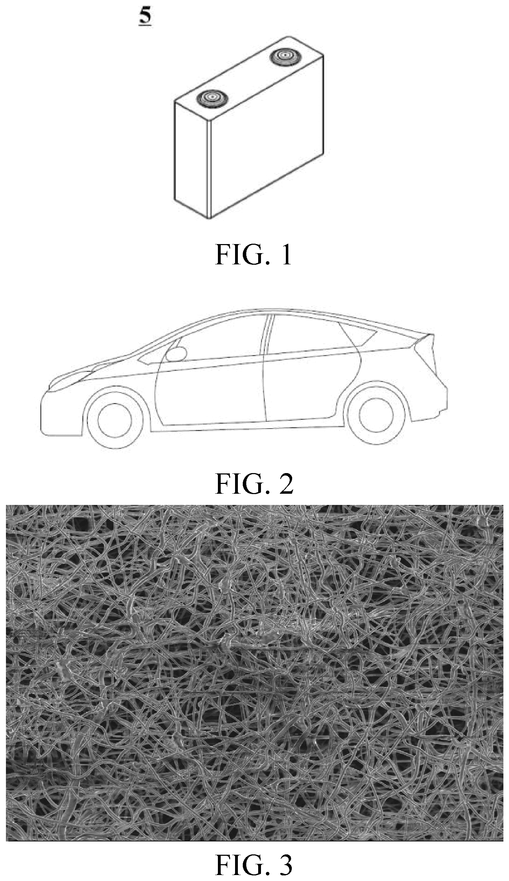

The battery cell mentioned in the embodiments of the present disclosure can independently implement a charging and discharging function. The battery cell may be cylindrical, cuboid, or in another shape, which is not limited in the embodiments of the present disclosure. FIG. 1 shows a battery cell 5 of a cuboidal structure as an example.

The battery apparatus mentioned in the embodiments of the present disclosure may include one or more battery cell assemblies, configured to supply voltage and capacity. The battery cell assembly may include a plurality of battery cells. The plurality of battery cells are connected in series, in parallel, or in series-parallel through a bus component.

In some embodiments, the battery cell assembly is usually formed by arranging a plurality of battery cells.

For example, the battery cell assembly may be a battery module. The battery module is formed by a plurality of battery cells that are arranged and fixed to form an independent module. For example, the battery module may be formed by tying the plurality of battery cells through a strap.

In some embodiments, the battery apparatus may be a battery pack. The battery pack includes a box body and one or more battery cell assemblies. The battery cell assembly is accommodated in the box body.

For example, the battery cell assembly may be a battery module. The battery cell assembly may be accommodated in the box body by securing the battery module in the box body.

For example, the battery cell assembly may alternatively be accommodated in the box body by directly securing a plurality of battery cells in the box body.

For example, the box body may include a first box body and a second box body. The first box body and the second box body are snapped to form a sealed space inside the box body to accommodate the battery cell assembly. The term "sealed" herein means "covered" or "closed", or may be hermetic, or may be non-hermetic. The first box body may be a top cover or a bottom plate.

For example, the box body may include a top cover, a frame, and a bottom plate. The top cover and the bottom plate are connected to the frame to form a sealed space inside the box body to accommodate the battery cell assembly.

In some embodiments, the box body may serve as a part of a chassis structure of a vehicle. For example, a part of the box body may serve as at least a part of the floor of a vehicle, or a part of the box body may serve as at least a part of the cross beam and longitudinal beam of a vehicle.

The technical solutions described in the embodiments of the present disclosure are all suitable for power consuming apparatuses in which battery cells and battery apparatuses are used, for example, may be, but are not limited to, a mobile device (such as a mobile phone, a tablet computer, or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship and a satellite, an energy storage system, and the like. The battery cell and the battery apparatus are configured to store or provide electric energy.

FIG. 2 is a schematic diagram of a power consuming apparatus as an example. The power consuming apparatus is a pure electric vehicle, a hybrid electric vehicle, a plug-in hybrid electric vehicle, or the like.

The battery cell provided in the embodiments of the present disclosure includes an electrode assembly and an electrolyte. The electrode assembly may be either of a wound structure or a stacked structure. This is not limited in the embodiments of the present disclosure.

The battery cell further includes an outer package, and the outer package is configured to encapsulate the electrode assembly and the electrolyte. The outer package may be a hard shell, for example, a hard plastic shell, an aluminum shell, or a steel shell. The outer package may alternatively be a soft pack, for example, a pouch type soft pack. The soft pack may be made from plastic, for example, one or more of an aluminum laminate film, polypropylene (PP), polybutylene terephthalate (PBT), and polybutylene succinate (PBS).

In view of the foregoing problem in the background, the present disclosure provides a porous negative electrode plate, and the use of the porous negative electrode plate in the battery cell can enable the battery cell to have a high gravimetric energy density, a high initial coulombic efficiency, and good cycling performance.

The porous negative electrode plate provided in the present disclosure includes a porous polymer substrate, where the porous polymer substrate includes a plurality of pores. The porous negative electrode plate includes a lithium metal layer, where the lithium metal layer is located on ridges on a surface of the porous polymer substrate in a thickness direction of the porous polymer substrate and on ridges of the pores inside the porous polymer substrate; or the porous negative electrode plate includes a lithium alloy layer, where the lithium alloy layer is located on the ridges on the surface of the porous polymer substrate in the thickness direction of the porous polymer substrate and on the ridges of the pores inside the porous polymer substrate.

The porous negative electrode plate includes a porous polymer substrate, so that a mass of the negative electrode can be reduced, and the gravimetric energy density of the battery cell can be increased.

The porous polymer substrate includes a plurality of pores. Therefore, a current density of the negative electrode can be reduced, growth of lithium dendrites can be relieved, and an expansion space can be provided for lithium deposition.

The lithium metal layer or the lithium alloy layer is provided on the ridges on the surface of the porous polymer substrate in the thickness direction of the porous polymer substrate and the ridges of the pores inside the porous polymer substrate. The lithium metal layer or the lithium alloy layer supplements intercalated lithium of the porous polymer substrate with a potential amount in advance, so that a battery cell using the porous negative electrode plate has a high initial coulombic efficiency and good cycling performance.

The lithium metal layer or the lithium alloy layer is located on both the ridges on the surface of the porous polymer substrate in the thickness direction of the porous polymer substrate and the ridges of the pores inside the porous polymer substrate, and can further better compensate for lithium loss caused by reasons such as formation of a solid electrolyte interface (SEI) film by the negative electrode and generation of dead lithium, so that the battery cell has the high initial coulombic efficiency and the good cycling performance.

Therefore, the use of the porous negative electrode plate provided in the present disclosure in the battery cell can enable the battery cell to have a high gravimetric energy density, a high initial coulombic efficiency, and good cycling performance.

In some embodiments, the porous polymer substrate may be a non-woven polymer fiber structure substrate or a porous foam polymer substrate. The non-woven polymer fiber structure refers to a porous polymer structure obtained by using an electrospinning process.

In some embodiments, a material of the non-woven polymer fiber structure substrate may include one or more of polyimide, polyvinylidene fluoride, polyacrylonitrile, polyethlylene terephthalate, poly(p-phenylene terephthalamide), poly(methyl methacrylate), polyurethane, polystyrene, poly(hexamethylene adipamide), polycaprolactam, polyetherimide, and derivatives thereof. The derivatives refer to products derived by replacing hydrogen atoms or atomic groups in a polymer with other atoms or atomic groups.

In some embodiments, the porous foam polymer substrate may include one or more of polyimide foam, polyethylene foam, polypropylene foam, polyurethane foam, polystyrene foam, melamine formaldehyde foam, and polyvinyl alcohol foam.

In some embodiments, the porous negative electrode plate includes a lithium metal layer, and the lithium metal layer is located on the ridges on the surface of the porous polymer substrate in the thickness direction of the porous polymer substrate and on the ridges of the pores inside the porous polymer substrate.

In this case, the lithium metal layer functions as both a conductive layer and a lithium supplement layer.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, and a micro-morphology of the lithium metal layer is nodular.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, and a thickness of the lithium metal layer may range from 0.1 µm to 1 µm, for example, may be 0.1 µm, 0.2 µm, 0.3 µm, 0.4 µm, 0.5 µm, 0.6 µm, 0.7 µm, 0.8 µm, 0.9 µm, 1 µm, or in a range formed by any of the foregoing values.

The thickness of the lithium metal layer is within the foregoing range, so that the porous negative electrode plate has high tensile strength and compressive strength while having the high initial coulombic efficiency.

Optionally, the thickness of the lithium metal layer may range from 0.2 µm to 1 µm, 0.3 µm to 1 µm, 0.4 µm to 1 µm, or 0.5 µm to 1 µm.

In some embodiments, the porous negative electrode plate includes a lithium metal layer, the lithium metal layer is located on the ridges on the surface of the porous polymer substrate in the thickness direction of the porous polymer substrate and on the ridges of the pores inside the porous polymer substrate, the lithium metal layer may further include a passivation layer, and optionally, the passivation layer may include Li₂O.

Optionally, the micro-morphology of the lithium metal layer is nodular, and the passivation layer may be located on the surface of the nodular lithium metal.

Optionally, the passivation layer is obtained by performing passivation processing on the lithium metal layer.

A dense passivation layer can be obtained by performing manual passivation processing on the lithium metal layer, thereby improving storage performance of the porous negative electrode plate.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, and the lithium metal layer is away from the porous polymer substrate.

In some embodiments, the conductive metal layer may include one or more of elemental Cu, Fe, Ni, and Ti, and alloys thereof.

In some embodiments, an areal density of the conductive metal layer may range from 40 g/m² to 60 g/m², for example, may be 40 g/m², 42 g/m², 44 g/m², 46 g/m², 48 g/m², 50 g/m², 52 g/m², 54 g/m², 56 g/m², 58 g/m², 60 g/m², or in a range formed by any of the foregoing values.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, the lithium metal layer is away from the porous polymer substrate, and the lithium metal layer includes a plurality of lithium metal particles. In other words, the micro-morphology of the lithium metal layer is granular. In this case, there are a plurality of lithium metal particles on the ridges, and the plurality of lithium metal particles accumulate to form the lithium metal layer.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, the lithium metal layer is away from the porous polymer substrate, and a thickness of the lithium metal layer may range from 0.1 µm to 1 µm, for example, may be 0.1 µm, 0.2 µm, 0.3 µm, 0.4 µm, 0.5 µm, 0.6 µm, 0.7 µm, 0.8 µm, 0.9 µm, 1 µm, or in a range formed by any of the foregoing values.

The thickness of the lithium metal layer is within the foregoing range, so that the porous negative electrode plate has high tensile strength and compressive strength while having the high initial coulombic efficiency.

Optionally, the thickness of the lithium metal layer may range from 0.2 µm to 1 µm, 0.3 µm to 1 µm, 0.4 µm to 1 µm, or 0.5 µm to 1 µm.

Optionally, there may further be a passivation layer on the lithium metal layer. Optionally, the passivation layer may include Li₂O.

Optionally, the lithium metal layer includes a plurality of lithium metal particles, and the passivation layer may be located on the surface of the lithium metal particles.

Optionally, the passivation layer is obtained by performing passivation processing on the lithium metal layer.

A dense passivation layer can be obtained by performing manual passivation processing on the lithium metal layer, thereby improving storage performance of the porous negative electrode plate.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, and the lithium alloy layer is away from the porous polymer substrate.

In some embodiments, the conductive metal layer may include one or more of elemental Cu, Fe, Ni, and Ti, and alloys thereof.

In some embodiments, an areal density of the conductive metal layer may range from 40 g/m² to 60 g/m², for example, may be 40 g/m², 42 g/m², 44 g/m², 46 g/m², 48 g/m², 50 g/m², 52 g/m², 54 g/m², 56 g/m², 58 g/m², 60 g/m², or in a range formed by any of the foregoing values.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and the lithium alloy layer includes a plurality of lithium alloy particles. In other words, a micro-morphology of the lithium alloy layer is granular. In this case, there are a plurality of lithium alloy particles on the ridges, and the plurality of lithium alloy particles accumulate to form the lithium alloy layer.

Therefore, uniform lithium deposition can be induced, and growth of lithium dendrites can be relieved. In addition, moisturizing performance of the electrolyte of the porous negative electrode plate can be improved, thereby improving the cycling performance of the battery cell.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and the lithium alloy layer may include element Li and at least one element of Sn, Zn, Bi, Au, Ag, Al, Si, Mg, Pt, Pb, Be, Ga, In, Ge, Sb, and Te.

These metal elements have a good affinity with lithium, can function as induction of uniform deposition of the lithium metal and relieving dendrite growth, and can further improve the cycling performance of the battery cell.

Optionally, the lithium alloy layer may include element Li, and at least one element of Sn, Zn, Bi, Au, Ag, Al, Si, and Mg.

Further optionally, the lithium alloy layer may include element Li, and at least one element of Sn, Bi, Au, and Ag.

In some embodiments, there may be one or more types of alloy materials in the lithium alloy layer.

In some examples, the lithium alloy layer may further include metal elementary substance.

In some embodiments, the lithium alloy layer may include an alloy of Li and at least one of elements Sn, Zn, Bi, Au, Ag, Al, Si, Mg, Pt, Pb, Be, Ga, In, Ge, Sb, and Te.

Optionally, the lithium alloy layer may further include at least one of elementary substances of Sn, Zn, Bi, Au, Ag, Al, Si, Mg, Pt, Pb, Be, Ga, In, Ge, Sb, and Te.

In some embodiments, the lithium alloy layer may include one or more of a Li-Sn alloy, a Li-Zn alloy, a Li-Bi alloy, a Li-Au alloy, a Li-Ag alloy, a Li-Al alloy, a Li-Si alloy, a Li-Mg alloy, a Li-Pt alloy, a Li-Pb alloy, a Li-Be alloy, a Li-Ga alloy, a Li-In alloy, a Li-Ge alloy, a Li-Sb alloy, or a Li-Te alloy.

It should be noted that, a particular alloy material in the lithium alloy layer may alternatively be a plurality of alloys that coexist. Using an example in which the lithium alloy layer is a Li-Bi alloy, the lithium alloy layer may include one or two of LiBi and Li₃Bi, and may further include elemental Bi. Using an example in which the lithium alloy layer is a Li-Sn alloy, the lithium alloy layer may include one or two of LiSn and Li₇Sn₃, and may further include elemental Sn.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, and a thickness of the lithium alloy layer may range from 0.1 µm to 2 µm, for example, may be 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, or in a range formed by any of the foregoing values.

The thickness of the lithium alloy layer is within the foregoing range, so that the porous negative electrode plate has high tensile strength and compressive strength while having the high initial coulombic efficiency.

Optionally, the thickness of the lithium alloy layer may range from 0.3 µm to 2 µm, 0.3 µm to 1.8 µm, 0.3 µm to 1.5 µm, 0.3 µm to 1.2 µm, 0.3 µm to 1 µm, 0.5 µm to 2 µm, 0.5 µm to 1.8 µm, 0.5 µm to 1.5 µm, 0.5 µm to 1.2 µm, or 0.5 µm to 1 µm.

In some embodiments, the porous negative electrode plate includes a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, the lithium alloy layer is away from the porous polymer substrate, the lithium alloy layer may further include a passivation layer, and optionally, the passivation layer may include Li₂O.

Optionally, the lithium alloy layer includes a plurality of lithium alloy particles, and the passivation layer may be located on the surface of the lithium alloy particles.

Optionally, the passivation layer is obtained by performing passivation processing on the lithium alloy layer.

A dense passivation layer can be obtained by performing manual passivation processing on the lithium alloy layer, thereby improving storage performance of the porous negative electrode plate.

In some embodiments, a thickness of the porous negative electrode plate may range from 50 µm to 100 µm, for example, may be 50 µm, 55 µm, 60 µm, 65 µm, 70 µm, 75 µm, 80 µm, 85 µm, 90 µm, 95 µm, 100 µm, or in a range formed by any of the foregoing values.

In some embodiments, a porosity of the porous negative electrode plate may range from 85% to 95%, for example, may be 85%, 86%, 87%, 88%, 89%, 90%, 91%, 92%, 93%, 94%, 95%, or in a range formed by any of the foregoing values. Therefore, a current density of the negative electrode can be reduced, growth of lithium dendrites can be relieved, and an expansion space can be provided for lithium deposition.

In some embodiments, a distribution range of pore sizes of the porous negative electrode plate may be from 4 µm to 12 µm, for example, the pore size may be 4 µm, 5 µm, 6 µm, 7 µm, 8 µm, 9 µm, 10 µm, 11 µm, 12 µm, or in a range formed by any of the foregoing values.

In some embodiments, an open porosity of the porous negative electrode plate may be greater than or equal to 99%.

In some embodiments, a distribution range of ridge diameters of the porous negative electrode plate may be from 0.5 µm to 2.5 µm.

The present disclosure further provides a preparation method for a porous negative electrode plate, which can prepare the porous negative electrode plate provided in the present disclosure.

In some embodiments, the preparation method for a porous negative electrode plate includes the following steps: providing a porous polymer substrate, the porous polymer substrate including a plurality of pores; and forming a lithium metal layer on ridges on a surface of the porous polymer substrate in a thickness direction of the porous polymer substrate and on ridges of pores inside the porous polymer substrate by lithium thermal evaporation.

The lithium thermal evaporation is a process in which raw material lithium (for example, lithium slice or lithium ingot) is fused and evaporated by means of heating and evaporation in a vacuum state to become gas particles, and the gas particles deposit on the substrate.

Optionally, the micro-morphology of the lithium metal layer is nodular. A binding force between the porous polymer substrate and lithium is weak, and in the lithium thermal evaporation, small-scale lithium deposition and accumulation occur, so that the micro-morphology of the lithium metal layer has a nodular shape.

Optionally, a deposition rate of the lithium thermal evaporation may be less than or equal to 5 Å/s. Further optionally, the deposition rate of the lithium thermal evaporation may be less than or equal to 2 Å/s.

In the lithium thermal evaporation, the gas lithium directly deposits on the porous polymer substrate to form the lithium metal layer, and a low deposition rate is used, facilitating formation of a denser and more uniform lithium metal layer.

In some other embodiments, the preparation method for a porous negative electrode plate includes the following steps: providing a porous polymer substrate, where the porous polymer substrate includes a plurality of pores, and a conductive metal layer is provided on the ridges on the surface of the porous polymer substrate in the thickness direction of the porous polymer substrate and on the ridges of the pores inside the porous polymer substrate; and forming a lithium metal layer by lithium thermal evaporation on the conductive metal layer on the ridges on the surface of the porous polymer substrate in the thickness direction of the porous polymer substrate and on the conductive metal layer on the ridges of the pores inside the porous polymer substrate.

Optionally, the micro-morphology of the lithium metal layer is granular. In this case, there are a plurality of lithium metal particles on the ridges, and the plurality of lithium metal particles accumulate to form the lithium metal layer.

Optionally, a deposition rate of the lithium thermal evaporation may be less than or equal to 5 Å/s. Further optionally, the deposition rate of the lithium thermal evaporation may be less than or equal to 2 Å/s.

In the lithium thermal evaporation, a low deposition rate is used, facilitating formation of a denser and more uniform lithium metal layer.

In still some other embodiments, the preparation method for a porous negative electrode plate includes the following steps: providing a porous polymer substrate, where the porous polymer substrate includes a plurality of pores, a conductive metal layer and a lithiophilic layer are provided on the ridges on the surface of the porous polymer substrate in the thickness direction of the porous polymer substrate and on the ridges of the pores inside the porous polymer substrate, and the conductive metal layer is located between the lithiophilic layer and the porous polymer substrate; and forming a lithium alloy layer through reaction of lithium metal with the lithiophilic layer on the ridges on the surface of the porous polymer substrate in the thickness direction of the porous polymer substrate and the lithiophilic layer on the ridges of the pores inside the porous polymer substrate by lithium thermal evaporation.

Optionally, a micro-morphology of the lithium alloy layer is granular. In this case, there are a plurality of lithium alloy particles on the ridges, and the plurality of lithium alloy particles accumulate to form the lithium alloy layer.

Optionally, a deposition rate of the lithium thermal evaporation may be less than or equal to 5 Å/s. Further optionally, the deposition rate of the lithium thermal evaporation may be less than or equal to 2 Å/s.

In the lithium thermal evaporation, the gas lithium interacts with the lithiophilic layer and forms the lithium alloy layer on the ridges in situ, and a low deposition rate is used, facilitating formation of a denser and more uniform lithium alloy layer.

A battery cell using the negative electrode of the porous polymer framework has a low initial coulombic efficiency. Lithium supplementation on the negative electrode can improve the initial coulombic efficiency of the battery cell. According to different lithium supplementation manners, the lithium supplementation may be classified into physical lithium supplementation, chemical lithium supplementation, and electrochemical lithium supplementation. The chemical lithium supplementation is dangerous and toxic to some extent, and operations of the electrochemical lithium supplementation are complex. Therefore, the two lithium supplementation manners are less applicable to industrial production. Currently, the most widely used lithium supplementation manner industrially is the physical lithium supplementation. The physical lithium supplementation may include melt coating lithium supplementation, lithium foil rolling lithium supplementation, and the like. Thermal resistance of the porous polymer framework is poor, and functional group structures in the porous polymer framework may be damaged by means of melt coating lithium supplementation, causing irreversible changes in physical properties and chemical properties of the porous polymer framework. The lithium foil rolling lithium supplementation can only form the lithium metal layer on the surface of the porous polymer framework, and cannot fully utilize functions the porous structure.

In the present disclosure, the lithium metal layer or the lithium alloy layer are formed on the ridges on the surface of the porous polymer substrate in the thickness direction of the porous polymer substrate and on the ridges of the pores inside the porous polymer substrate by lithium thermal evaporation. A lithium deposition temperature of the lithium thermal evaporation is less than 50°C, so that the physical properties and the chemical properties of the porous polymer substrate are not affected. In addition, the lithium metal layer or the lithium alloy layer may be formed both on the ridges on the surface of the porous polymer substrate in the thickness direction of the porous polymer substrate and on the ridges of the pores inside the porous polymer substrate by lithium thermal evaporation.

By lithium thermal evaporation, a potential amount of intercalated lithium of the porous polymer substrate is supplemented in advance, so that a battery cell using the porous negative electrode plate has a high initial coulombic efficiency and good cycling performance.

By lithium thermal evaporation, a potential alloying capacity of the lithiophilic layer is further supplemented in advance, thereby reducing lithium consumed by alloying of the lithiophilic layer during use of the battery cell, and further enabling the battery cell using the porous negative electrode plate to have the high initial coulombic efficiency and the good cycling performance.

In some embodiments, lithium heating and evaporation manners of the lithium thermal evaporation may include electron gun beam heating, resistance wire heating, laser heating, high-frequency heating, and the like.

In some embodiments, the lithiophilic layer may include one or more of elemental Sn, Zn, Bi, Au, Ag, Al, Si, Mg, Pt, Pb, Be, Ga, In, Ge, Sb, and Te, and alloys thereof.

In some embodiments, an areal density of the lithiophilic layer may range from 2 g/m² to 3 g/m², for example, may be 2 g/m², 2.1 g/m², 2.2 g/m², 2.3 g/m², 2.4 g/m², 2.5 g/m², 2.6 g/m², 2.7 g/m², 2.8 g/m², 2.9 g/m², 3 g/m², or in a range formed by any of the foregoing values.

In some embodiments, a process of disposing the conductive metal layer on the ridges on the surface of the porous polymer substrate in the thickness direction of the porous polymer substrate and on the ridges of the pores inside the porous polymer substrate may include a water electroplating process, a physical vapor deposition process (for example, a magnetron sputtering process), a combination of the water electroplating process and the physical vapor deposition process, or the like.

In some embodiments, the conductive metal layer may include one or more of elemental Cu, Fe, Ni, and Ti, and alloys thereof.

In some embodiments, an areal density of the conductive metal layer may range from 40 g/m² to 60 g/m², for example, may be 40 g/m², 42 g/m², 44 g/m², 46 g/m², 48 g/m², 50 g/m², 52 g/m², 54 g/m², 56 g/m², 58 g/m², 60 g/m², or in a range formed by any of the foregoing values.

In some embodiments, after the step of lithium thermal evaporation, the preparation method for a porous negative electrode plate may further include a step of preparation processing.

In some embodiments, the passivation processing may be performed in an oxygen-containing atmosphere, an inert gas atmosphere, or a carbon dioxide atmosphere. Optionally, the inert gas may include one or more of nitrogen gas, argon gas, and helium gas.

The oxygen-containing atmosphere may include oxygen and an inert gas. Optionally, the oxygen-containing atmosphere may be a mixed atmosphere of air and the inert gas. Optionally, the inert gas may include one or more of nitrogen gas, argon gas, and helium gas.

In some embodiments, the passivation processing may be performed in the oxygen-containing atmosphere.

Performing passivation by using the oxygen-containing atmosphere can form a denser oxide passivation layer on the surface of the lithium metal layer or the lithium alloy layer. In this way, oxidation corrosion of lithium in the air can be reduced, thereby further improving the storage performance of the porous negative electrode plate.

Optionally, a volume fraction of oxygen in the oxygen-containing atmosphere may range from 20% to 70%, more optionally, 30% to 70%, 30% to 60%, 35% to 60%, 35% to 55%, or 40% to 50%.

The present disclosure further provides a battery cell, which includes the porous negative electrode plate provided in the present disclosure, or a porous negative electrode plate prepared by using the preparation method provided in the present disclosure.

The battery cell further includes a positive electrode plate, a separator, and an electrolyte. The separator is disposed between the positive electrode plate and the porous negative electrode plate.

### [Positive electrode plate]

In some embodiments, the positive electrode plate includes a positive electrode current collector and a positive electrode film layer arranged on at least one surface of the positive electrode current collector, and the positive electrode film layer includes a positive electrode active material. For example, the positive electrode current collector has two opposite surfaces in a thickness direction thereof, and the positive electrode film layer is arranged on either or both of the two opposite surfaces of the positive electrode current collector.

In some embodiments, metal foil or a composite current collector may be used as the positive electrode current collector. A pure metal, an alloy, or a metal on which surface processing is performed may be used as the metal foil. For example, aluminum foil may be used as the metal foil. The composite current collector may include a polymer material base layer and a layer of a metal material formed on at least one surface of the polymer material base layer. For example, the metal material may include, but is not limited to, one or more of aluminum, aluminum alloy, nickel, nickel alloy, titanium, titanium alloy, silver, and silver alloy. For example, the polymer material base layer may include, but is not limited to, one or more of polypropylene, polyethylene terephthalate (PET), polybutylene terephthalate (PBT), polystyrene (PS), and polyethylene.

In some embodiments, the positive electrode active material includes a material capable of deintercalating and intercalating lithium. Optionally, the positive electrode active material may include, but is not limited to, one or more of lithium-transition metal oxide, lithium-containing phosphate, and respective modified compounds thereof. Examples of lithium transition metal oxide may be, but are not limited to, one or more selected from the group consisting of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve the energy density of a battery cell, the positive electrode active material may include one or more of lithium transition metal oxide represented by a general formula LiₐNi_{b}Co_{c}M_{d}OₑA_{f} and modified compounds thereof. 0.8 ≤ a ≤ 1.2, 0.5 ≤ B < 1, 0 < c < 1, 0 < d < 1, 1 ≤ e ≤ 2, 0 ≤ f ≤ 1, M may include one or more of Mn, Al, Zr, Zn, Cu, Cr, Mg, Fe, V, Ti, and B, and A may include one or more of N, F, S and Cl.

For example, the positive electrode active material may include, but is not limited to, one or more of LiCoO₂, LiNiO₂, LiMnO₂, LiMn₂O₄, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), LiNi_{0.83}Mn_{0.08}Co_{0.07}O₂ (Ni83 for short), LiNi_{0.90}Mn_{0.05}Co_{0.05}O₂ (Ni90 for short), LiNi_{0.94}Mn_{0.03}Co_{0.03}O₂ (Ni94 for short), LiNi_{0.96}Co_{0.02}Mn_{0.02}O₂ (Ni96 for short), LiNi_{0.80}Co_{0.15}Al_{0.05}O₂, LiFePO₄, LiMnPO₄, and respective modified compounds thereof.

The battery cell is accompanied by the deintercalation and consumption of Li during the charging and discharging process, and the molar content of Li varies as the battery cell is discharged to different states. In the list of positive electrode active materials in the present disclosure, the molar content of Li refers to the initial state of the material, that is, the state before feeding. When the positive electrode active materials are used in the battery cell, the molar content of Li changes after charge and discharge cycles. In the list of positive electrode active materials in the present disclosure, the molar content of O is only a theoretical value. The release of oxygen from the lattice causes a change in the molar content of O, and the actual molar content of O also fluctuates.

The modified compounds of the positive electrode active materials may be obtained by performing doping modification and/or surface coating modification on the positive electrode active material.

In some embodiments, the positive electrode film layer may further include a positive electrode binder. For example, the positive electrode binder may include, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer may further include a positive electrode conductive agent. For example, the positive electrode conductive agent may include, but is not limited to, at least one of superconducting carbon, acetylene black, carbon black, Ketjen black, carbon dots, carbon nanotubes, graphene, and carbon nanofibers.

In some embodiments, the positive electrode plate may be prepared in the following manner. The components for preparing the positive electrode plate, such as the positive electrode active material, the positive electrode conductive agent, the positive electrode binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode plate.

### [Separator]

The separator may be arranged between the positive electrode plate and the porous negative electrode plate to mainly play a role in preventing an internal short circuit. The type of the separator is not particularly limited in the present disclosure, and any well-known separator with a porous structure having good chemical stability and mechanical stability can be selected. In some embodiments, the material of the separator may include, but is not limited to, one or more selected from the group consisting of glass fiber, non-woven cloth, polyethylene, polypropylene, polyvinylidene fluoride, and polyimide. The separator may be a single layer film or a multilayer composite film. When the separator is a multilayer composite film, materials of the layers are the same or different. The separator may be an independent component located between the positive and negative electrodes, or may be attached to the surfaces of the positive and negative electrodes. The surface of the separator may further be coated with an inorganic particle coating, an organic particle coating, or an organic/inorganic composite coating.

### [Electrolyte]

In some embodiments, the electrolyte may use an electrolyte solution, and the electrolyte solution may include an electrolyte salt and an organic solution.

In some embodiments, the electrolyte salt may include, but is not limited to, one or more of lithium bis(fluorosulfonyl)imide (LiFSI), lithium bis(trifluoromethanesulfonyl)imide (LiTFSI), lithium bis(oxalate)borate (LiBOB), lithium difluoro(oxalato)borate (LiDFOB), lithium difluorobis(oxalato)phosphate (LiDFOP), lithium tetrafluoro(oxalato)phosphate (LiTFOP), lithium difluorophosphate (LiPO₂F₂), lithium hexafluorophosphate (LiPF₆), lithium tetrafluoroborate (LiBF₄), lithium hexafluoroarsenate (LiAsF₆), and lithium trifluoromethanesulfonate (LiCF₃SO₃).

In some embodiments, a concentration of the electrolyte salt may be 0.3 mol/L or more, and optionally 0.7 mol/L or more, and the concentration of the electrolyte salt may further be 4 mol/L or less, and optionally, 2.5 mol/L or less, or 1.7 mol/L or less. When the concentration of the electrolyte salt falls within the foregoing range, the electrolytic solution can have appropriate ionic conductivity.

The organic solvent may include, but is not limited to, one or more of an ester, an ether, a sulfone, a nitrile, and the like. The ester may include, but is not limited to, one or more of carbonate, phosphate, carboxylate, sulfate, sulfonate, and the like. The carbonate may include a cyclic carbonate and/or a chain carbonate. Optionally, the carbonate may include both a cyclic carbonate and a chain carbonate. The chain carbonate may include a low-viscosity polar chain carbonate, an aliphatic branched carbonate, and the like.

For example, the organic solvent may include, but is not limited to, tetraethylene glycol dimethyl ether (TEGDME), dimethoxyethane (DME), 1,3-dioxolane (DOL), trimethyl phosphate, 3-methoxypropionitrile, 1,1,2,2-tetrafluoroethyl-2,2,3,3-tetrafluoropropylether (TTE), H(CF₂)₂OCH₃, C₄F₉OCH₃, H(CF₂)₂OCH₂CH₃, H(CF₂)₂OCH₂CF₃, CF₃CHFCF₂OCH₃, CF₃CHFCF₂OCH₂CH₃, 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, 7-trifluoromethyl hexadecafluorooctyl propyl ether.

In some embodiments, the electrolyte solution may further include an additive. For example, the additive may include a negative electrode film-forming additive, a positive electrode film-forming additive, or an additive capable of improving certain performance of the battery cell, such as an additive capable of improving overcharging performance, an additive capable of improving high temperature performance, or an additive capable of improving low temperature power performance.

A preparation method for a battery cell is well-known. In some embodiments, the positive electrode plate, the separator, the porous negative electrode plate, and the electrolyte solution may be assembled into the battery cell. For example, the positive electrode plate, the separator, and the porous negative electrode plate may be assembled into an electrode assembly, the electrode assembly is placed into an outer package, dried and then injected with the foregoing electrolyte solution, and processes, such as encapsulation and standing, are performed to obtain the battery cell.

### Examples

Content disclosed in the present disclosure is described in detail in the following examples. These examples are only for illustrative purposes because various modifications and changes made without departing from the scope of the content disclosed in the present disclosure are apparent to a person skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Comparative Example 1

### Preparation of porous negative electrode plate

A commercial non-woven polyimide fiber film was cut into a piece of 10 cm × 10 cm. After being baked in a vacuum drying oven at 80°C for 10 min, the piece was taken out. A conductive metal Ni layer is formed on ridges on the non-woven polyimide fiber film by means of magnetron sputtering to be used as a porous negative electrode plate, where an areal density of the conductive metal Ni layer is 50 g/m².

A thickness of the porous negative electrode plate is 75 µm, a porosity is 91%, a distribution range of pore diameters is from 5 µm to 10 µm, and a distribution range of ridge diameters is from 0.5 µm to 1 µm.

### Preparation of positive electrode plate

A positive electrode active material LiNi_{0.8}Co_{0.1}Mn_{0.1}O₂, a positive electrode conductive agent, that is, conductive carbon black, and a positive electrode binder, that is, polyvinylidene fluoride (PVDF), were mixed in a weight ratio of 98:1:1, and then N-methylpyrrolidone solvent was added to form a slurry; and the slurry was coated on a positive electrode current collector, that is, copper foil, followed by processes such as drying, cold pressing, and cutting to obtain a positive electrode plate to be used.

### Preparation of separator

A polyethylene porous film with a thickness of 12 µm was used as the separator.

### Preparation of electrolyte solution

Lithium bis(fluorosulfonyl)imide (LiFSI) was dissolved in dimethoxyethane (DME), to prepare an electrolyte. A concentration of LiFSI is 1 mol/L.

### Preparation of battery cell

In a glove box, assembly was performed according to a sequence of a negative electrode shell, a spring sheet, a gasket, the porous negative electrode plate, the electrolyte, the separator, the electrolyte, the positive electrode plate, a gasket, and a positive electrode shell, and then encapsulation is performed, to obtain a button battery.

### Comparative Example 2

The preparation of the battery cell is the same as that in the comparative example 1 except that the preparation of the porous negative electrode plate is different.

### Preparation of porous negative electrode plate

A commercial non-woven polyimide fiber film was cut into a piece of 10 cm × 10 cm. After being baked in a vacuum drying oven at 80°C for 10 min, the piece was taken out. A conductive metal Ni layer is formed on ridges on the non-woven polyimide fiber film by means of magnetron sputtering, and then a lithiophilic metal Bi layer is formed on the conductive metal Ni layer by means of magnetron sputtering to be used as a porous negative electrode plate, where an areal density of the conductive metal Ni layer is 50 g/m², and an areal density of the metal Bi layer is 3 g/m².

A thickness of the porous negative electrode plate is 75 µm, a porosity is 91%, a distribution range of pore diameters is from 5 µm to 10 µm, and a distribution range of ridge diameters is from 0.5 µm to 1 µm.

### Example 1

The preparation of the battery cell is the same as that in the comparative example 1 except that the preparation of the porous negative electrode plate is different.

### Preparation of porous negative electrode plate

A commercial non-woven polyimide fiber film was cut into a piece of 10 cm × 10 cm. After being baked in a vacuum drying oven at 80°C for 10 min, the piece was taken out, and was fixed on a deposition bottom plate. The deposition bottom plate was fixed above an evaporation source, where a lithium slice or a lithium ingot was loaded into a crucible as the evaporation source. A cavity door was closed, and vacuuming started to be performed until 5×10⁻⁴ Pa. A coating parameter was set, Li was selected as a coating material, a final coating thickness was selected to be 1 µm, and the coating was started. A substrate baffle was closed, an electronic gun was turned on, and a gun filament beam current was slowly increased until a rate of a film thickness meter increases from 0 to 5 Å/s. Increasing of the gun filament beam current was stopped, and the beam current was repeatedly adjusted until a deposition rate is steady. The substrate baffle was opened, a thickness on the film thickness meter is cleared and remeasured, and coating was started. When a thickness of the coating film accumulates to 1 µm, the substrate baffle was closed, the electronic gun was turned off, and a vacuuming system was disabled. A mixed gas of oxygen and nitrogen at a 50:50 volume ratio was charged into a vacuum chamber to perform passivation processing, until a pressure inside the vacuum cavity is the same as that of the outside. The cavity door was opened, and sampling is performed, to obtain a modified non-woven polyimide fiber film to be used as a porous negative electrode plate. The porous negative electrode plate includes a lithium metal layer. The lithium metal layer is located on ridges on a surface of the non-woven polyimide fiber film in a thickness direction of the non-woven polyimide fiber film and on ridges of pores inside the non-woven polyimide fiber film. A micro-morphology of the lithium metal layer is nodular. A passivation layer was further formed on the surface of the lithium metal layer, where the passivation layer includes Li₂O.

A thickness of the porous negative electrode plate is 75 µm, a porosity is 91%, a distribution range of pore diameters is from 5 µm to 10 µm, and a distribution range of ridge diameters is from 1 µm to 1.5 µm.

### Example 2

The preparation of the battery cell is the same as that in the comparative example 1 except that the preparation of the porous negative electrode plate is different.

### Preparation of porous negative electrode plate

A commercial non-woven polyimide fiber film was cut into a piece of 10 cm × 10 cm. After being baked in a vacuum drying oven at 80°C for 10 min, the piece was taken out. A conductive metal Ni layer is formed on ridges on the non-woven polyimide fiber film by means of magnetron sputtering, where an areal density of the conductive metal Ni layer is 50 g/m². Then the non-woven polyimide fiber film on which the conductive metal Ni layer was plated was fixed on a deposition bottom plate. The deposition bottom plate was fixed above an evaporation source, where a lithium slice or a lithium ingot was loaded into a crucible as the evaporation source. A cavity door was closed, and vacuuming started to be performed until 5×10⁻⁴ Pa. A coating parameter was set, Li was selected as a coating material, a final coating thickness was selected to be 0.5 µm, and the coating was started. A substrate baffle was closed, an electronic gun was turned on, and a gun filament beam current was slowly increased until a rate of a film thickness meter increases from 0 to 5 Å/s. Increasing of the gun filament beam current was stopped, and the beam current was repeatedly adjusted until a deposition rate is steady. The substrate baffle was opened, a thickness on the film thickness meter is cleared and remeasured, and coating was started. When a thickness of the coating film accumulates to 0.5 µm, the substrate baffle was closed, the electronic gun was turned off, and a vacuuming system was disabled. A mixed gas of oxygen and nitrogen at a 50:50 volume ratio was charged into a vacuum chamber to perform passivation processing, until a pressure inside the vacuum cavity is the same as that of the outside. The cavity door was opened, and sampling is performed, to obtain a modified non-woven polyimide fiber film to be used as a porous negative electrode plate. The porous negative electrode plate includes a conductive metal Ni layer and a lithium metal layer. The conductive metal Ni layer is located on ridges on a surface of the non-woven polyimide fiber film in a thickness direction of the non-woven polyimide fiber film and on ridges of pores inside the non-woven polyimide fiber film. The lithium metal layer is located on the conductive metal Ni layer, and a micro-morphology of the lithium metal layer is granular. A passivation layer was further formed on the surface of the lithium metal layer, where the passivation layer includes Li₂O.

A thickness of the porous negative electrode plate is 75 µm, a porosity is 91%, a distribution range of pore diameters is from 5 µm to 10 µm, and a distribution range of ridge diameters is from 0.75 µm to 1.25 µm.

### Example 3

The preparation of the battery cell is the same as that in the comparative example 1 except that the preparation of the porous negative electrode plate is different.

### Preparation of porous negative electrode plate

A commercial non-woven polyimide fiber film was cut into a piece of 10 cm × 10 cm. After being baked in a vacuum drying oven at 80°C for 10 min, the piece was taken out. A conductive metal Ni layer is formed on ridges on the non-woven polyimide fiber film by means of magnetron sputtering, and then a lithiophilic metal Bi layer is formed on the conductive metal Ni layer by means of magnetron sputtering, where an areal density of the conductive metal Ni layer is 50 g/m², and an areal density of the metal Bi layer is 3 g/m². Then the non-woven polyimide fiber film on which the conductive metal Ni layer and the lithiophilic metal Bi layer were plated was fixed on a deposition bottom plate. The deposition bottom plate was fixed above an evaporation source, where a lithium slice or a lithium ingot was loaded into a crucible as the evaporation source. A cavity door was closed, and vacuuming started to be performed until 5×10⁻⁴ Pa. A coating parameter was set, Li was selected as a coating material, a final coating thickness was selected to be 1 µm, and the coating was started. A substrate baffle was closed, an electronic gun was turned on, and a gun filament beam current was slowly increased until a rate of a film thickness meter increases from 0 to 5 Å/s. Increasing of the gun filament beam current was stopped, and the beam current was repeatedly adjusted until a deposition rate is steady. The substrate baffle was opened, a thickness on the film thickness meter is cleared and remeasured, and coating was started. When a thickness of the coating film accumulates to 1 µm, the substrate baffle was closed, the electronic gun was turned off, and a vacuuming system was disabled. A mixed gas of oxygen and nitrogen at a 50:50 volume ratio was charged into a vacuum chamber to perform passivation processing, until a pressure inside the vacuum cavity is the same as that of the outside. The cavity door was opened, and sampling is performed, to obtain a modified non-woven polyimide fiber film to be used as a porous negative electrode plate. The porous negative electrode plate includes a conductive metal Ni layer and a Li-Bi alloy layer. The conductive metal Ni layer is located on ridges on a surface of the non-woven polyimide fiber film in a thickness direction of the non-woven polyimide fiber film and on ridges of pores inside the non-woven polyimide fiber film. The Li-Bi alloy layer is located on the conductive metal Ni layer, and a micro-morphology of the Li-Bi alloy layer is granular. A passivation layer was further formed on the surface of the Li-Bi alloy layer, where the passivation layer includes Li₂O.

A thickness of the porous negative electrode plate is 75 µm, a porosity is 91%, a distribution range of pore diameters is from 5 µm to 10 µm, and a distribution range of ridge diameters is from 1 µm to 1.5 µm.

### Performance tests

### (1) Initial coulombic efficiency test

An environment temperature is set to 25°C. A button battery was charged in a constant current-constant voltage mode (CC-CV mode), and was discharged in a constant current mode. First, the button battery was charged in the constant-current mode at a fixed rate of 0.2C until a voltage increases to 4.3 V, to obtain a first cycle charging capacity. Then charging was switched to a constant-voltage mode, and charging was performed until a cut-off current is 0.05C. Then, discharging is performed to 2.8 V in the constant-current mode at a discharging rate of 0.5C, to obtain a first circle discharging capacity. Initial coulombic efficiency = first cycle discharge capacity/first cycle charge capacity × 100%.

### (2) Cycling performance test

An environment temperature is set to 25°C. A button battery was charged in a constant current-constant voltage mode (CC-CV mode), and was discharged in a constant current mode. First, the button battery was charged in the constant-current mode at a fixed rate of 0.2C until a voltage increases to 4.3 V. Then charging was switched to a constant-voltage mode, until a cut-off current is 0.05C. Then, discharging is performed to 2.8 V in the constant-current mode at a discharging rate of 0.5C. Cyclical charging and discharging are performed according to the foregoing method, and a quantity of cycles for which the button battery has undergone when a discharging capacity fades to 80% of the first circle discharging capacity is recorded, to represent cycling performance of the battery cell. A larger quantity of cycles indicates better cycling performance of the battery cell.

**Table 1**

| Serial number | Initial coulombic efficiency/% | Quantity of cycles/circle |
|---|---|---|
| Comparative Example 1 | 71.2 | 33 |
| Comparative Example 2 | 66.3 | 38 |
| Example 1 | 79.2 | 45 |
| Example 2 | 76.7 | 58 |
| Example 3 | 77.0 | 51 |

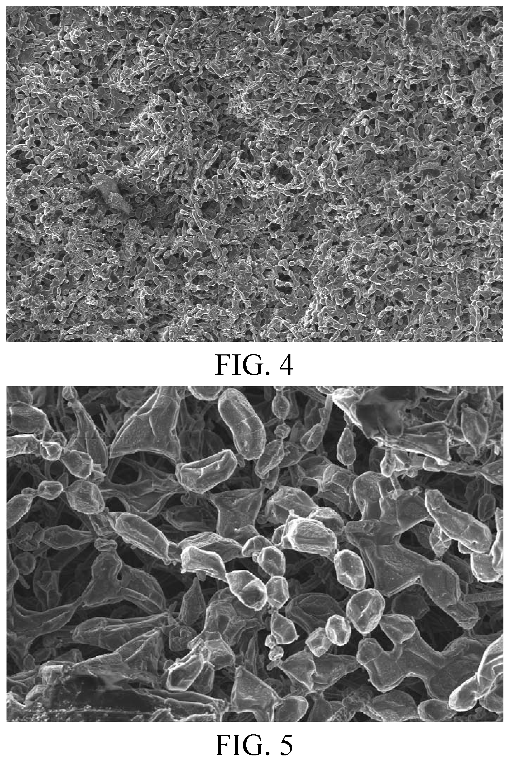

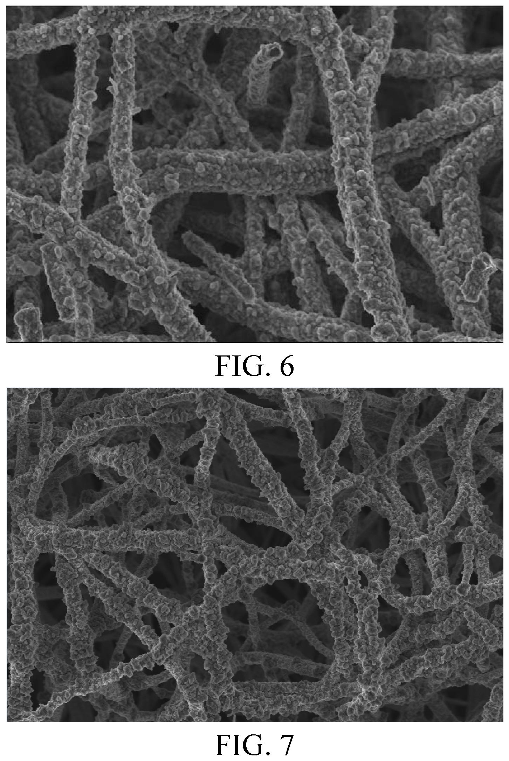

FIG. 3 shows a scanning electron microscope (SEM) image of a commercial non-woven polyimide fiber film; FIG. 4 and FIG. 5 show an SEM image of a porous negative electrode plate prepared in example 1; FIG. 6 shows an SEM image of a porous negative electrode plate prepared in example 2; and FIG. 7 shows an SEM image of a porous negative electrode plate prepared in example 3.

As shown in FIG. 3, the commercial non-woven polyimide fiber film shows a staggered distribution of ridges and smooth surfaces of the ridges.

As shown in FIG. 4 and FIG. 5, the surface of the ridges of the porous negative electrode plate prepared in the present disclosure has a nodular shape.

As shown in FIG. 6, the surface of the ridges of the porous negative electrode plate prepared in the present disclosure has a granular shape.

As shown in FIG. 7, the surface of the ridges of the porous negative electrode plate prepared in the present disclosure has a granular shape.

It can be learned from the foregoing test results that, the porous negative electrode plate prepared in the present disclosure can enable a battery cell to have a high initial coulombic efficiency and a long cycle life.

It should be noted that the present disclosure is not limited to the above embodiments. The above embodiments are only illustrative, and the embodiments within the scope of the technical solution of the present disclosure that have substantively the same composition and the same role and effect as the technical idea are all included in the technical scope of the present disclosure. In addition, other embodiments constructed by applying various modifications conceivable to those skilled in the art to the embodiments and combining some of the constituent elements of the embodiments without departing from the scope of the essence of the present disclosure are also included in the scope of the present disclosure.

## Claims

1. A porous negative electrode plate, wherein
the porous negative electrode plate comprises a porous polymer substrate, the porous polymer substrate comprising a plurality of pores; and the porous negative electrode plate comprises a lithium metal layer, the lithium metal layer being located on ridges on a surface of the porous polymer substrate in a thickness direction of the porous polymer substrate and on ridges of the pores inside the porous polymer substrate; or the porous negative electrode plate comprises a lithium alloy layer, the lithium alloy layer being located on the ridges on the surface of the porous polymer substrate in the thickness direction of the porous polymer substrate and on the ridges of the pores inside the porous polymer substrate.

2. The porous negative electrode plate according to claim 1, wherein the porous polymer substrate is a non-woven polymer fiber structure substrate or a porous foam polymer substrate.

3. The porous negative electrode plate according to claim 2, wherein
a material of the non-woven polymer fiber structure substrate comprises one or more of polyimide, polyvinylidene fluoride, polyacrylonitrile, polyethlylene terephthalate, poly(p-phenylene terephthalamide), poly(methyl methacrylate), polyurethane, polystyrene, poly(hexamethylene adipamide), polycaprolactam, polyetherimide, and derivatives thereof; and/or
the porous foam polymer substrate comprises one or more of polyimide foam, polyethylene foam, polypropylene foam, polyurethane foam, polystyrene foam, melamine formaldehyde foam, and polyvinyl alcohol foam.

4. The porous negative electrode plate according to any one of claims 1 to 3, wherein the porous negative electrode plate comprises a lithium metal layer, the lithium metal layer is located on the ridges on the surface of the porous polymer substrate in the thickness direction of the porous polymer substrate and on the ridges of the pores inside the porous polymer substrate, and a micro-morphology of the lithium metal layer is nodular.

5. The porous negative electrode plate according to any one of claims 1 to 4, wherein the porous negative electrode plate comprises a lithium metal layer, the lithium metal layer is located on the ridges on the surface of the porous polymer substrate in the thickness direction of the porous polymer substrate and on the ridges of the pores inside the porous polymer substrate, and a thickness of the lithium metal layer ranges from 0.1 µm to 1 µm.

6. The porous negative electrode plate according to any one of claims 1 to 5, wherein the porous negative electrode plate comprises a lithium metal layer, the lithium metal layer is located on the ridges on the surface of the porous polymer substrate in the thickness direction of the porous polymer substrate and on the ridges of the pores inside the porous polymer substrate, a passivation layer is further provided on the lithium metal layer, and the passivation layer comprises Li₂O.

7. The porous negative electrode plate according to any one of claims 1 to 3, wherein the porous negative electrode plate comprises a conductive metal layer and a lithium metal layer, the conductive metal layer is located on the ridges on the surface of the porous polymer substrate in the thickness direction of the porous polymer substrate and on the ridges of the pores inside the porous polymer substrate, the lithium metal layer is located on the conductive metal layer, the conductive metal layer is close to the porous polymer substrate, and the lithium metal layer is away from the porous polymer substrate.

8. The porous negative electrode plate according to claim 7, wherein
the conductive metal layer comprises one or more of elemental Cu, Fe, Ni, and Ti, and alloys thereof; and/or
an areal density of the conductive metal layer ranges from 40 g/m² to 60 g/m².

9. The porous negative electrode plate according to any one of claims 7 and 8, wherein the lithium metal layer comprises a plurality of lithium metal particles.

10. The porous negative electrode plate according to any one of claims 7 to 9, wherein a thickness of the lithium metal layer ranges from 0.1 µm to 1 µm.

11. The porous negative electrode plate according to any one of claims 7 to 10, wherein a passivation layer is further provided on the lithium metal layer, and the passivation layer comprises Li₂O.

12. The porous negative electrode plate according to any one of claims 1 to 3, wherein the porous negative electrode plate comprises a conductive metal layer and a lithium alloy layer, the conductive metal layer is located on the ridges on the surface of the porous polymer substrate in the thickness direction of the porous polymer substrate and on the ridges of the pores inside the porous polymer substrate, the lithium alloy layer is located on the conductive metal layer, the conductive metal layer is close to the porous polymer substrate, and the lithium alloy layer is away from the porous polymer substrate.

13. The porous negative electrode plate according to claim 12, wherein
the conductive metal layer comprises one or more of elemental Cu, Fe, Ni, and Ti, and alloys thereof; and/or
an areal density of the conductive metal layer ranges from 40 g/m² to 60 g/m².

14. The porous negative electrode plate according to any one of claims 12 and 13, wherein the lithium alloy layer comprises a plurality of lithium alloy particles.

15. The porous negative electrode plate according to any one of claims 12 to 14, wherein the lithium alloy layer comprises element Li and at least one element of Sn, Zn, Bi, Au, Ag, Al, Si, Mg, Pt, Pb, Be, Ga, In, Ge, Sb, and Te.

16. The porous negative electrode plate according to any one of claims 12 to 15, wherein a thickness of the lithium alloy layer ranges from 0.1 µm to 2 µm.

17. The porous negative electrode plate according to any one of claims 12 to 16, wherein a passivation layer is further provided on the lithium alloy layer, and the passivation layer comprises Li₂O.

18. The porous negative electrode plate according to any one of claims 1 to 17, wherein the porous negative electrode plate meets one or more of the following conditions (1) to (5):
(1) a thickness of the porous negative electrode plate ranges from 50 µm to 100 µm;
(2) a porosity of the porous negative electrode plate ranges from 85% to 95%;
(3) a distribution range of pore diameters of the porous negative electrode plate is from 4 µm to 12 µm;
(4) an open porosity of the porous negative electrode plate is greater than or equal to 99%; and
(5) a distribution range of ridge diameters of the porous negative electrode plate is from 0.5 µm to 2.5 µm.

19. A preparation method for a porous negative electrode plate, comprising the following steps: providing a porous polymer substrate, the porous polymer substrate comprising a plurality of pores; and forming a lithium metal layer on ridges on a surface of the porous polymer substrate in a thickness direction of the porous polymer substrate and on ridges of the pores inside the porous polymer substrate by lithium thermal evaporation.

20. The preparation method according to claim 19, wherein the preparation method for a porous negative electrode plate comprises the following steps: providing a porous polymer substrate, wherein the porous polymer substrate comprises a plurality of pores, and a conductive metal layer is provided on the ridges on the surface of the porous polymer substrate in the thickness direction of the porous polymer substrate and on the ridges of the pores inside the porous polymer substrate; and forming a lithium metal layer by lithium thermal evaporation on the conductive metal layer on the ridges on the surface of the porous polymer substrate in the thickness direction of the porous polymer substrate and on the conductive metal layer on the ridges of the pores inside the porous polymer substrate.

21. The preparation method according to claim 19, wherein the preparation method for a porous negative electrode plate comprises the following steps: providing a porous polymer substrate, wherein the porous polymer substrate comprises a plurality of pores, a conductive metal layer and a lithiophilic layer are provided on the ridges on the surface of the porous polymer substrate in the thickness direction of the porous polymer substrate and on the ridges of the pores inside the porous polymer substrate, and the conductive metal layer is located between the lithiophilic layer and the porous polymer substrate; and forming a lithium alloy layer through reaction of lithium metal with the lithiophilic layer on the ridges on the surface of the porous polymer substrate in the thickness direction of the porous polymer substrate and the lithiophilic layer on the ridges of the pores inside the porous polymer substrate by lithium thermal evaporation.

22. The preparation method according to claim 21, wherein
the lithiophilic layer comprises one or more of elemental Sn, Zn, Bi, Au, Ag, Al, Si, Mg, Pt, Pb, Be, Ga, In, Ge, Sb, and Te, and alloys thereof; and/or
an areal density of the lithiophilic layer ranges from 2 g/m² to 3 g/m².

23. The preparation method according to any one of claims 20 to 22, wherein
the conductive metal layer comprises one or more of elemental Cu, Fe, Ni, and Ti, and alloys thereof; and/or
an areal density of the conductive metal layer ranges from 40 g/m² to 60 g/m².

24. The preparation method according to any one of claims 19 to 23, wherein a deposition rate of the lithium thermal evaporation is less than or equal to 5 Å/s.

25. The preparation method according to any one of claims 19 to 24, wherein after the step of lithium thermal evaporation, the preparation method further comprises a step of preparation processing.

26. The preparation method according to claim 25, wherein the passivation processing is performed in an oxygen-containing atmosphere, an inert gas atmosphere, or a carbon dioxide atmosphere.

27. A battery cell, comprising a positive electrode plate, a separator, and the porous negative electrode plate according to any one of claims 1 to 18 or a porous negative electrode plate prepared by using the preparation method according to any one of claims 19 to 26, wherein the separator is disposed between the positive electrode plate and the porous negative electrode plate.

28. A battery apparatus, comprising a plurality of battery cells according to claim 27.

29. A power consuming apparatus, comprising the battery cell according to claim 27 or the battery apparatus according to claim 28.
